# EUROPEAN PATENT SPECIFICATION

(11) **EP 2 903 050 B1**
(45) Date of publication and mention of the grant of the patent: **03.01.2018**
(21) Application number: 13842907.1
(22) Date of filing: 10.09.2013
(51) Int. Cl.: H01M 2/02, B32B 7/00, B32B 7/02, B32B 7/12, B32B 15/00, B32B 15/04, B32B 15/20, B32B 27/00, B32B 27/06, B32B 27/08, B32B 27/28, B32B 27/32, B32B 27/40

(54) **PACKAGING MATERIAL FOR BATTERY**
VERPACKUNGSMATERIAL FÜR BATTERIE
MATÉRIAU DE MISE EN BOÎTIER DESTINÉ À UNE BATTERIE

(30) Priority: 28.09.2012 JP 2012217967
(43) Date of publication of application: 05.08.2015
(73) Proprietor: Dai Nippon Printing Co., Ltd., Tokyo 162-8001 (JP)
(72) Inventor: HASHIMOTO, Yohei, Tokyo 162-8001 (JP); YAMASHITA, Rikiya, Tokyo 162-8001 (JP); YOKOTA, Kazuhiko, Tokyo 162-8001 (JP); OJIRI, Tetsuya, Tokyo 162-8001 (JP)
(74) Representative: Müller-Boré & Partner Patentanwälte PartG mbB
(86) International application number: PCT/JP2013/074410
(87) International publication number: WO 2014/050542

(56) References cited:
- WO-A1-2008/114731
- WO-A1-2012/050182
- JP-A- 2004 047 246
- JP-A- 2005 063 685
- JP-A- 2005 288 996
- JP-A- 2008 287 971
- JP-A- 2008 522 366
- JP-A- 2011 001 484
- JP-A- 2011 222 482
- JP-A- 2012 203 984
- JP-A- 2012 248 497
- JP-A- 2013 101 763
- JP-A- 2013 157 285
- JP-B1- 5 267 718

## Description

The present invention relates to a packaging material for a cell capable of preventing the occurrence of cracks, pinholes and so forth during molding while having an excellent moldability.

Various types of cells have been heretofore developed, and in every cell, a packaging material is a member that is absolutely necessary for sealing cell elements such as an electrode and an electrolyte. Metallic packaging materials have been often used heretofore as packagings for cells.

On the other hand, in recent years, cells have been required to be diversified in shape, and desired to be thinner and lighter as performance of electric cars, hybrid electric cars, personal computers, cameras and mobile phones has been enhanced. However, metallic packaging materials for cells that have been often used heretofore have the disadvantage that it is difficult to keep up with diversification of shapes, and there is a limit to weight reduction.

Thus, in recent years, a film-shaped laminate body with a base material, a metal layer and a sealant layer laminated in this order has been proposed as a packaging material for a cell which is easily processed into diversified shapes and is capable of achieving thickness reduction and weight reduction. However, such a film-shaped packaging material is thinner than a metallic packaging material, and thus has the disadvantage that cracks, pinholes and so forth are easily generated during molding. When cracks, pinholes and so forth are generated in a packaging material for a cell, an electrolyte solution may permeate a metal layer to form a metal precipitate, resulting in occurrence of a short-circuit, and therefore it is absolutely necessary that a film-shaped packaging material for a cell be made to have such a characteristic that cracks, pinholes and so forth are hardly generated during molding, i.e. an excellent moldability.

Various studies focusing on a bonding layer for bonding a metal layer have been conducted heretofore in order to improve the moldability of a film-shaped packaging material for a cell. For example, Patent Document 1 discloses a packaging material for a cell case, which includes an outer layer composed of a heat-resistant resin film, an aluminum foil, and an inner layer composed of a thermoplastic resin film, wherein the aluminum foil and the inner layer are bonded to each other using an adhesive composition containing a polyolefin polyol and a polyfunctional isocyanate curing agent, so that the packaging material for a cell case has an excellent moldability. Patent Document 2 discloses a laminated packaging material including an inner layer composed of a resin film, a first bonding layer, a metal layer, a second bonding layer and an outer layer composed of a resin film, wherein at least one of the first bonding layer and the second bonding layer is formed from an adhesive composition containing a resin having an active hydrogen group on the side chain, a polyfunctional isocyanate and a polyfunctional amine compound, so that reliability of the packaging material for deeper molding is improved.

However, what properties should be satisfied by a bonding layer to be provided for ensuring that the packaging material for a cell has an excellent moldability are not clarified, and the techniques shown in Patent Documents 1 and 2 cannot sufficiently satisfy the demand for improvement of the moldability, which has been more and more increasing in recent years.

Patent Document 1: Japanese Patent Laid-open Publication No. 2005-63685
Patent Document 2: Japanese Patent Laid-open Publication No. 2008-287971
WO 2012/050182 A1 discloses a lithium ion battery exterior material, including a base material layer, a sequentially laminated adhesive layer, an aluminum foil layer provided with a corrosion prevention treated layer, and an adhesive resin layer on one surface of the base material layer, wherein the adhesive resin layer contains an acid-modified polyolefin resin and a miscible elastomer dispersed in the acid-modified polyolefin at a dispersed phase size of 1 nm to less than 1 µm.

When the moldability of a packaging material for a cell is considered, cracks easily occur at the time of deformation during molding if a bonding layer for bonding a metal layer is excessively hard, and if the bonding layer is excessively soft, deformation easily occurs to apply a local force, so that the layer is easily broken. Therefore, for ensuring that the packaging material for a cell has an excellent moldability, it may be important that the bonding layer for bonding the metal layer has contradictory characteristics: softness and hardness with a good balance, but specific properties for achieving this purpose have not been clarified.

Thus, the present invention has been devised in view of the above-described problems, and an object of the present invention is to provide a packaging material for a cell capable of preventing the occurrence of cracks, pinholes and so forth during molding while having an excellent moldability.

The present inventors have extensively conducted studies for solving the above-described problems, and resultantly found that in a packaging material for a cell, which includes a laminate body having at least a base material layer, a bonding layer, a metal layer and a sealant layer sequentially arranged in this order, the bonding layer satisfies at least two of the following properties (1) to (3), and thus prevents the occurrence of cracks, pinholes and so forth during molding, while having a remarkably excellent moldability.
(1) The hardness is 20 to 115 MPa when an indenter is pressed into the bonding layer by 5 µm from the cross-section of the laminate body using a nano-indenter.
(2) The peak temperature is 10 to 60°C for the loss modulus peak that is acquired when a dynamic viscoelasticity is measured at a frequency of 1 Hz for the bonding layer.
(3) I_{H}/I_{M} is 0.15 to 1.5, where an integral value of peak areas existing in 2800 to 3000 cm⁻¹ is defined as I_{M}, and an integral value of peak areas existing in 3100 to 3500 cm⁻¹ is defined as I_{H}, which are measured using an infrared absorption spectrum.

The present invention is defined by the scope of the appended claims and has been completed by further conducting studies based on the above-mentioned findings. That is, the present invention provides a packaging material for a cell and a cell, which have the following aspects.

Item 1. A packaging material for a cell which includes a laminate body including at least a base material layer, a bonding layer, a metal layer and a sealant layer in this order, wherein the bonding layer satisfies at least two of the following properties (1) to (3):
(1) The hardness is 20 to 115 MPa when an indenter is pressed into the bonding layer by 5 µm from the cross-section of the laminate body using a nano-indenter.
(2) The peak temperature is 10 to 60°C for the loss modulus peak that is acquired when a dynamic viscoelasticity is measured at a frequency of 1 Hz for the bonding layer.
(3) I_{H}/I_{M} is 0.15 to 1.5, where an integral value of peak areas existing in 2800 to 3000 cm⁻¹ is defined as I_{M}, and an integral value of peak areas existing in 3100 to 3500 cm⁻¹ is defined as I_{H}, which are measured using an infrared absorption spectrum.

Item 2. The packaging material for a cell according to item 1, wherein the bonding layer satisfies all of the properties (1) to (3).

Item 3. The packaging material for a cell according to item 1 or 2, wherein the bonding layer satisfies the hardness of 22 to 102 MPa, the peak temperature of 13 to 56°C for the loss modulus and the ratio I_{H}/I_{M} of 0.16 to 1.42.

Item 4. The packaging material for a cell according to any one of items 1 to 3, wherein the bonding layer is formed from an urethane-based adhesive containing a polyol compound (main agent) and an isocyanate-based compound (curing agent).

Item 5. The packaging material for a cell according to any one of items 1 to 4, wherein the metal layer is formed of an aluminum foil.

Item 6. The packaging material for a cell according to any one of items 1 to 5, wherein the sealant layer is formed of at least one selected from the group consisting of a polyolefin, a cyclic polyolefin, a carboxylic acid-modified polyolefin and a carboxylic acid-modified cyclic polyolefin.

Item 7. A cell, wherein a cell element including at least a positive electrode, a negative electrode and an electrolyte is stored in the packaging material for a cell according to any one of items 1 to 6.

Item 8. A method for producing a cell, the method including:
a step of storing a cell element including at least a positive electrode, a negative electrode and an electrolyte in the packaging material for a cell, wherein
the packaging material for a cell includes a laminate body including at least a base material layer, a bonding layer, a metal layer and a sealant layer laminated in this order, and
the bonding layer satisfies at least two of the following properties (1) to (3):
   (1) The hardness is 20 to 115 MPa when an indenter is pressed into the bonding layer by 5 µm from the cross-section of the laminate body using a nano-indenter.
   (2) The peak temperature is 10 to 60°C for the loss modulus peak that is acquired when a dynamic viscoelasticity is measured at a frequency of 1 Hz for the bonding layer.
   (3) I_{H}/I_{M} is 0.15 to 1.5, where an integral value of peak areas existing in 2800 to 3000 cm⁻¹ is defined as I_{M}, and an integral value of peak areas existing in 3100 to 3500 cm⁻¹ is defined as I_{H}, which are measured using an infrared absorption spectrum.

Item 9. Use of a laminate body as a packaging material for a cell, the laminate body including at least a base material layer, a bonding layer, a metal layer and a sealant layer in this order, wherein the bonding layer satisfies at least two of the following properties (1) to (3):
(1) The hardness is 20 to 115 MPa when an indenter is pressed into the bonding layer by 5 µm from the cross-section of the laminate body using a nano-indenter.
(2) The peak temperature is 10 to 60°C for the loss modulus peak that is acquired when a dynamic viscoelasticity is measured at a frequency of 1 Hz for the bonding layer.
(3) I_{H}/I_{M} is 0.15 to 1.5, where an integral value of peak areas existing in 2800 to 3000 cm⁻¹ is defined as I_{M}, and an integral value of peak areas existing in 3100 to 3500 cm⁻¹ is defined as I_{H}, which are measured using an infrared absorption spectrum.

Item 10. Use of a packaging material for producing a cell, the packaging material including a laminate body including at least a base material layer, a bonding layer, a metal layer and a sealant layer in this order, wherein the bonding layer satisfies at least two of the following properties (1) to (3):
(1) The hardness is 20 to 115 MPa when an indenter is pressed into the bonding layer by 5 µm from the cross-section of the laminate body using a nano-indenter.
(2) The peak temperature is 10 to 60°C for the loss modulus peak that is acquired when a dynamic viscoelasticity is measured at a frequency of 1 Hz for the bonding layer.
(3) I_{H}/I_{M} is 0.15 to 1.5, where an integral value of peak areas existing in 2800 to 3000 cm⁻¹ is defined as I_{M}, and an integral value of peak areas existing in 3100 to 3500 cm⁻¹ is defined as I_{H}, which are measured using an infrared absorption spectrum.

A packaging material for a cell according to the present invention includes a laminate body including at least a base material layer, a bonding layer, a metal layer and a sealant layer laminated in this order, wherein the bonding layer integrally satisfies at least two of the later-described properties 1 to 3. Thus, the packaging material for a cell has an excellent moldability, and further, the occurrence of cracks, pinholes and so forth during molding can be effectively suppressed, so that productivity can be improved. In the packaging material for a cell according to the present invention, the properties of the bonding layer for bonding the metal layer in the laminate body are set to fall within a specific range to achieve an excellent moldability, and therefore even an adhesive with a new composition, which will be developed in the future, can be applied to the packaging material for a cell according to the present invention, so that the packaging material for a cell has high versatility and can significantly contribute to techniques for improvement of packaging materials for a cell in the future.

Fig. 1 is a view showing one example of a cross-sectional structure of a packaging material for a cell according to the present invention.
Fig. 2 is a view showing one example of a cross-sectional structure of a packaging material for a cell according to the present invention.

A packaging material for a cell according to the present invention includes a laminate body including at least a base material layer, a bonding layer, a metal layer and a sealant layer in this order, wherein the bonding layer satisfies specific properties. Hereinafter, the packaging material for a cell according to the present invention will be described in detail.

### 1. Laminated Structure of Packaging Material for Cell

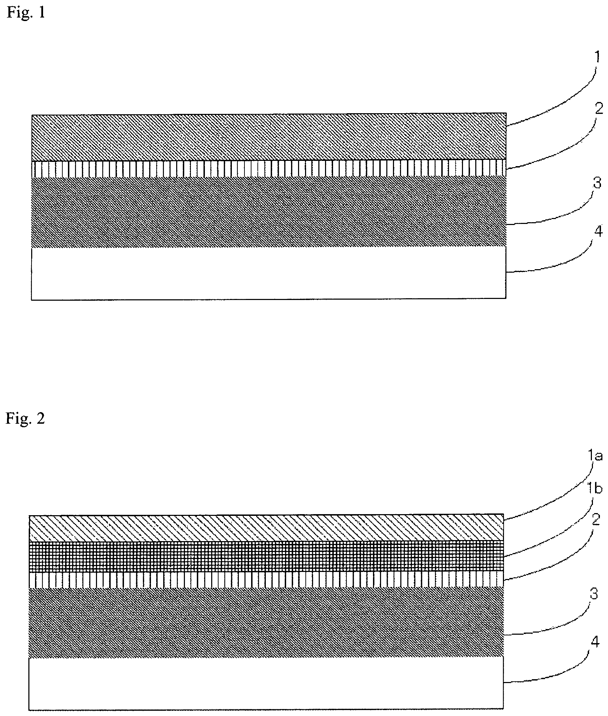

The packaging material for a cell includes a laminate body with at least a base material layer 1, a bonding layer 2, a metal layer 3 and a sealant layer 4 laminated in this order as shown in Figs. 1 and 2. In the packaging material for a cell according to the present invention, the base material layer 1 is an outermost layer, and the sealant layer 4 is an innermost layer. That is, at the time of assembling a cell, the sealant layer 4 situated on the periphery of a cell element is heat-sealed with itself to hermetically seal the cell element, so that the cell element is encapsulated.

The packaging material for a cell according to the present invention may be provided with a bonding layer 5 between the metal layer 3 and the sealant layer 4 as necessary in order to improve adhesion of these layers.

### 2. Composition of Each Layer Forming Packaging Material for Cell

### [Base Material Layer 1]

In the packaging material for a cell according to the present invention, the base material layer 1 is a layer forming an outermost layer. The material that forms the base material layer 1 is not particularly limited as long as it has insulation quality. Examples of the material that forms the base material layer 1 include polyester resins, polyamide resins, epoxy resins, acrylic resins, fluororesins, polyurethane resins, silicon resins, phenol resins, and mixtures, copolymers and the like thereof. Specific examples of the polyester resin include polyethylene terephthalate, polybutylene terephthalate, polyethylene naphthalate, polybutylene naphthalate, copolymerized polyester and polycarbonate. Specific examples of the polyamide resin include nylon 6, nylon 6,6, copolymers of nylon 6 and nylon 6,6, nylon 6,10 and polymethaxylylene adipamide (MXD6). Among them, nylons and polyesters are preferred, and biaxially stretched nylons and biaxially stretched polyesters are further preferred, with biaxially stretched nylons being especially preferred.

The base material layer 1 may be formed of one resin layer, but may be formed of two or more resin layers for improving pinhole resistance and insulation quality. When the base material layer is formed of two or more resin layers, specific examples of the structure of the base material layer include a multilayer structure in which a resin layer composed of polyester and a resin layer composed of nylon are laminated, preferably a multilayer structure in which a resin layer composed of biaxially stretched polyester and a resin layer composed of biaxially stretched nylon are laminated. When the base material layer is made to have a multilayer structure, two or more resin layers may be laminated with an adhesive interposed therebetween, and the type, amount and the like of the adhesive used are similar to those in the later-described bonding layer 5. Fig. 2 shows a sectional view of the packaging material for a cell according to the present invention in which two base material layers are formed of two resin layers (material layers 1a and 1b).

The thickness of the base material layer 1 is, for example, 10 to 50 µm, preferably 15 to 30 µm.

### [Bonding Layer 2]

In the packaging material for a cell according to the present invention, the bonding layer 2 is a layer provided between the base material layer 1 and the metal layer 3 for bonding these layers together, and the packaging material for a cell according to the present invention has an excellent moldability as the bonding layer 2 satisfies at least two of the following properties (1) to (3).

### (1) Property 1: Hardness in Nano-indentation Method

The property 1 refers to a property in which a hardness is 20 to 115 MPa when an indenter is pressed into the bonding layer to a depth of 5 µm from the cross-section of the laminate body using a nano-indenter. Specifically, the indentation depth is determined in the following manner: an indenter having a tip shape of a regular triangular pyramid (Berkovich-type) composed of a diamond tip is pressed into the bonding layer at the cross-section portion of the laminate body to an indentation depth of 5 µm using a nano-indenter, and a hardness at which the indenter is pressed into the bonding layer (nano-indenter hardness) is measured.

As the property 1 of the bonding layer 2, the hardness under the above-mentioned conditions is preferably 22 to 113 MPa, further preferably 22 to 110 MPa for ensuring that the packaging material for a cell according to the present invention has a further excellent moldability.

### (2) Property 2: Peak Temperature for Loss Modulus in Measurement of Dynamic Viscoelasticity

The property 2 refers to a property in which the peak temperature is 10 to 60°C for the loss modulus (E") that is acquired when a dynamic viscoelasticity is measured at a frequency of 1 Hz for the bonding layer. Specifically, the peak temperature is determined in the following manner: a laminate body with a bonding layer laminated on a base material is cut to 10 mm × 5 mm to provide a sample, a loss modulus is measured with the sample heated from -50°C to 200°C at a temperature elevation rate of 1 °C/minute at a frequency of 1 Hz using a dynamic viscoelasticity measurement device, and a temperature at which the loss modulus reaches a peak value is measured.

As the property 2 of the bonding layer 2, the peak temperature is preferably 10 to 58°C, further preferably 18 to 50°C for ensuring that the packaging material for a cell according to the present invention has a further excellent moldability.

### (3) Property 3: Ratio of Peak of Hydrogen Bonds to Methylene in Infrared Absorption Spectrum Method

The property 3 refers to a property in which a ratio I_{H}/I_{M} is 0.15 to 1.5, where an integral value of peak areas existing in 2800 to 3000 cm⁻¹ is defined as I_{M}, and an integral value of peak areas existing in 3100 to 3500 cm⁻¹ is defined as I_{H}, which are measured using an infrared absorption spectrum. Specifically, the ratio I_{H}/I_{M} is determined in the following manner: a laminate body with a bonding layer laminated on a base material is provided as a sample, values I_{M} and I_{H} are determined by measuring an infrared absorption spectrum of the bonding layer, and a ratio thereof (I_{H}/I_{M}) is calculated. The value I_{H} corresponds to an integral value of peak areas of hydrogen bonds, and the value I_{M} corresponds to an integral value of peak areas of methylene.

As the property 3 of the bonding layer 2, the ratio I_{H}/I_{M} is preferably 0.12 to 1.45, further preferably 0.18 to 1.00 for ensuring that the packaging material for a cell according to the present invention has a further excellent moldability.

In the packaging material for a cell according to the present invention, the bonding layer 2 should be one that satisfies at least two of the properties 1 to 3. As properties of the bonding layer 2, preferably at least the properties 1 and 3 or the properties 2 and 3 are satisfied, and further preferably all of the properties 1 to 3 are satisfied for ensuring that the packaging material for a cell according to the present invention has a further excellent moldability. Particularly when the bonding layer 2 satisfies the hardness of 22 to 102 MPa, the peak temperature of 13 to 56°C for the loss modulus and the ratio I_{H}/I_{M} of 0.16 to 1.42, the moldability can be remarkably improved.

The adhesive used for forming the bonding layer 2 may be a two-liquid curable adhesive, or may be a one-liquid curable adhesive as long as the properties are satisfied. Further, the adhesion mechanism of the adhesive used for forming the bonding layer 2 is not particularly limited, and may be any one of a chemical reaction type, a solvent volatilization type, a heat melting type, a heat pressing type and so on.

The type of the adhesive to be used for forming the bonding layer 2 is not particularly limited as long as the properties are satisfied, and examples thereof include polyester-based resins such as polyethylene terephthalate, polybutylene terephthalate, polyethylene naphthalate, polybutylene naphthalate, polyethylene isophthalate, polycarbonate and copolymerized polyester; polyether-based adhesives; polyurethane-based adhesives; epoxy-based resins; phenol resin-based resins; polyamide-based resins such as nylon 6, nylon 66, nylon 12 and copolymerized polyamide; polyolefin-based resins such as polyolefins, carboxylic acid-modified polyolefins and metal-modified polyolefins, polyvinyl acetate-based resins; cellulose-based adhesives; (meth)acryl-based resins; polyimide-based resins; amino resins such as urea resins and melamine resins; rubbers such as chloroprene rubber, nitrile rubber and styrene-butadiene rubber; and silicone-based resins. These adhesive components may be used alone, or may be used in combination of two or more thereof.

For ensuring that the bonding layer 2 has the properties, the characteristics of an adhesive to be used, such as a structure of a monomer that forms a polymer chain, an intermolecular interaction between adjacent polymer chains, three-dimensional crosslinked structure, and so forth may be appropriately adjusted, and preferred examples of the adhesive to be used for forming the bonding layer 2 will be described below.

Preferred examples of the adhesive that can be used for forming the bonding layer 2 satisfying the properties include urethane-based adhesives containing a polyol compound (main agent) and an isocyanate-based compound (curing agent).

Examples of the polyol compound to be used in the urethane-based adhesive include polyester polyols, polyester polyurethane polyols, polyether polyols and polyether polyurethane polyols. The hydroxyl equivalent and the weight average molecular weight of the polyol compound are not particularly limited as long as the properties are ultimately satisfied in a relationship with an isocyanate-based compound to be combined, and for example, the hydroxyl equivalent (number/mol) is 0.5 to 2.5, preferably 0.7 to 1.9, and the weight average molecular weight is 500 to 120000, preferably 1000 to 80000.

Among these polyol compounds, polyester polyols, polyester polyurethane polyols and polyether polyurethane polyols are preferred. These polyol compounds may be used alone, or may be used in combination of two or more thereof.

Examples of the isocyanate-based compound to be used in the urethane-based adhesive include polyisocyanates, adduct products thereof, isocyanurate-modified products thereof, carbodiimide-modified products thereof, allophanate-modified products thereof and biuret-modified products thereof. Specific examples of the polyisocyanate include aromatic diisocyanates such as diphenylmethane diisocyanate (MDI), polyphenylmethane diisocyanate (polymeric MDI), toluene diisocyanate (TDI), hexamethylene diisocyanate (HDI), bis(4-isocyanatecyclohexyl)methane (H12MDI), isophorone diisocyanate (IPDI), 1,5-naphthalene diisocyanate (1,5-NDI), 3,3'-dimethyl-4,4-diphenylene diisocyanate (TODI) and xylene diisocyanate (XDI); aliphatic diisocyanates such as trimethylene diisocyanate, hexamethylene diisocyanate, trimethylhexamethylene diisocyanate and isophorone diisocyanate; and cycloaliphatic diisocyanates such as 4,4'-methylenebis(cyclohexylisocyanate) and isophorone diisocyanate. Specific examples of the adduct product include those obtained by adding trimethylolpropane, glycol or the like to the foregoing polyisocyanate. Among these isocyanate-based compounds, polyisocyanates and adduct products thereof are preferred; aromatic diisocyanates, adduct products thereof and isocyanurate-modified products thereof are further preferred; MDI, polymeric MDI, TDI, adduct products thereof and isocyanurate-modified products thereof are more preferred; and adduct products of MDI, adduct products of TDI, and isocyanurate-modified products of polymeric MDI and TDI are especially preferred. These isocyanate-based compounds may be used alone, or may be used in combination of two or more thereof.

The adhesive to be used for forming the bonding layer 2 satisfying the properties is preferably a urethane-based adhesive containing at least one polyol compound selected from the group consisting of a polyester polyol, a polyester polyurethane polyol, a polyether polyol and a polyether polyurethane polyol, and at least one isocyanate-based compound selected from the group consisting of an aromatic diisocyanate, an adduct product thereof and an isocyanurate-modified product thereof; further preferably a urethane-based adhesive containing at least one polyol compound selected from the group consisting of a polyester polyol, a polyester polyurethane polyol, a polyether polyol and a polyether polyurethane polyol, and at least one isocyanate-based compound selected from the group consisting of MDI, polymeric MDI, TDI, an adduct thereof and an isocyanurate-modified product thereof.

In the adhesive containing a polyol compound (main agent) and an isocyanate-based compound (curing agent), a ratio of the former compound and the latter compound is appropriately set according to the properties that should be possessed by the bonding layer 2, and for example, the ratio of isocyanate groups in the isocyanate-based compound per 1 mole of hydroxyl groups in the polyol compound is 1 to 30 mole, preferably 3 to 20 mole.

The thickness of the bonding layer 2 is, for example, 1 to 10 µm, preferably 3 to 8 µm.

### [Metal Layer 3]

In the packaging material for a cell according to the present invention, the metal layer 3 is a layer which is intended to improve the strength of the packaging material, and also functions as a barrier layer for preventing ingress of water vapor, oxygen, light and the like into the cell. Specific examples of the metal that forms the metal layer 3 include metal foils such as those of aluminum, stainless steel and titanium. Among them, aluminum is suitably used. For preventing occurrence of creases and pinholes during production of the packaging material, it is preferred to use soft aluminum, for example annealed aluminum (JIS A8021P-O) or (JIS A8079P-O), for the metal layer 3 in the present invention.

The thickness of metal layer 3 is, for example, 10 to 200 µm, preferably 20 to 100 µm.

Preferably, at least one surface, preferably both surfaces, of the metal layer 3 is subjected to a chemical conversion treatment for stabilization of bonding, prevention of dissolution and corrosion, and so on. Here, the chemical conversion treatment is a treatment for forming an acid resistance film on the surface of the metal layer. Examples of the chemical conversion treatment include a chromic acid chromate treatment using chromic acid compound such as chromium nitrate, chromium fluoride, chromium sulfate, chromium acetate, chromium oxalate, chromium biphosphate, acetylacetate chromate, chromium chloride or chromium potassium sulfate; a phosphoric acid chromate treatment using a phosphoric acid compound such as sodium phosphate, potassium phosphate, ammonium phosphate or polyphosphoric acid; and a chromate treatment using an aminated phenol polymer composed of repeating units represented by the following general formulae (1) to (4).

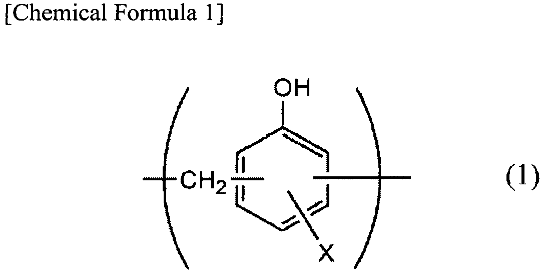

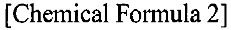

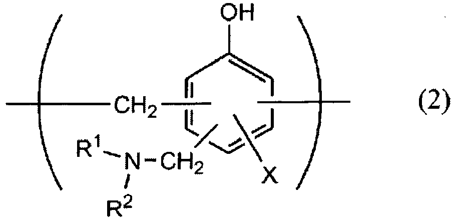

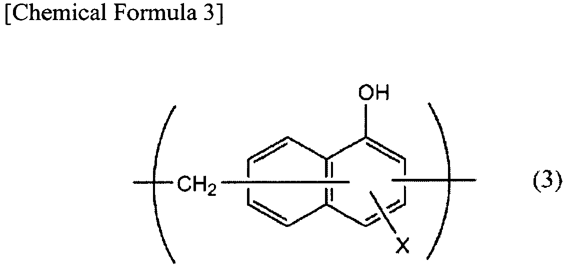

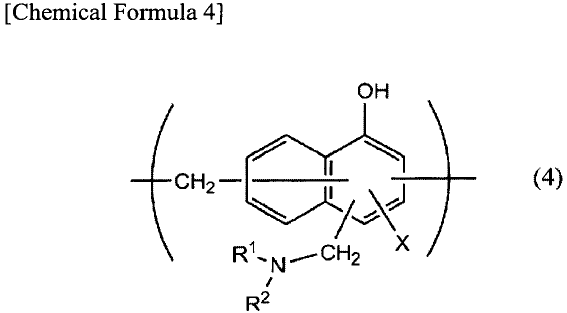

In the general formulae (1) to (4), X represents a hydrogen atom, a hydroxyl group, an alkyl group, a hydroxyalkyl group, an allyl group or a benzyl group. R¹ and R^{Z} are the same or different, and each represent a hydroxyl group, an alkyl group or a hydroxyalkyl group. In the general formulae (1) to (4), examples of the alkyl group represented by X, R¹ and R² include linear or branched alkyl groups with a carbon number of 1 to 4, such as a methyl group, an ethyl group, a n-propyl group, an isopropyl group, a n-butyl group, an isobutyl group and a tert-butyl group. Examples of the hydroxyalkyl group represented by X, R¹ and R² include linear or branched alkyl groups with a carbon number of 1 to 4, which is substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group and a 4-hydroxybutyl group. In the general formulae (1) to (4), X is preferably any one of a hydrogen atom, a hydroxyl group, and a hydroxyalkyl group. The number average molecular weight of the aminated phenol polymer composed of repeating units represented by the general formulae (1) to (4) is, for example, about 500 to about 1000000, preferably about 1000 to about 20000.

Examples of the chemical conversion treatment method for imparting corrosion resistance to the metal layer 3 include a method in which the metal layer 3 is coated with a dispersion of fine particles of a metal oxide such as aluminum oxide, titanium oxide, cerium oxide or tin oxide or barium sulfate in phosphoric acid, and annealed at 150°C or higher to form corrosion resistance treatment layer on the surface of the metal layer 3. A resin layer with a cationic polymer crosslinked with a crosslinking agent may be formed on the corrosion resistance treatment layer. Here, examples of the cationic polymer include polyethyleneimine, ion polymer complexes composed of a polymer having polyethyleneimine and a carboxylic acid, primary amine-grafted acrylic resins obtained by grafting primary amine to an acryl backbone, polyallylamine or derivatives thereof, and aminophenol. These cationic polymers may be used alone, or may be used in combination of two or more thereof. Examples of the crosslinking agent include compounds having at least one functional group selected from the group consisting of an isocyanate group, a glycidyl group, a carboxyl group and an oxazoline group, and silane coupling agents. These crosslinking agents may be used alone, or may be used in combination of two or more thereof.

The chemical conversion treatment may be performed with one chemical conversion treatment alone, or may be performed in combination of two or more chemical conversion treatments. The chemical conversion treatment may be performed using one compound alone, or may be performed using two or more compounds in combination. Among them, a chromic acid chromate treatment is preferred, and a chromate treatment using a chromic acid compound, a phosphoric acid compound and the aminated phenol polymer in combination is further preferred.

The amount of the acid resistance film to be formed on the surface of the metal layer 3 in the chemical conversion treatment is not particularly limited, but for example when a chromate treatment is performed using a chromic acid compound, a phosphoric acid compound and the aminated phenol polymer in combination, it is desirable that the chromic acid compound be contained in an amount of about 0.5 mg to about 50 mg, preferably about 1.0 mg to about 40 mg, in terms of chromium, the phosphorus compound be contained in an amount of about 0.5 mg to about 50 mg, preferably about 1.0 to about 40 mg, in terms of phosphorus, and the aminated phenol polymer be contained in an amount of about 1 mg to 200 mg, preferably about 5.0 mg to 150 mg, per 1 m² of the surface of the metal layer.

The chemical conversion treatment is performed in the following manner: a solution containing a compound to be used for formation of an acid resistance film is applied to the surface of the metal layer by a bar coating method, a roll coating method, a gravure coating method, an immersion method or the like, and heating is then performed so that the temperature of the metal layer is about 70 to 200°C. The metal layer may be subjected to a degreasing treatment by an alkali immersion method, an electrolytic cleaning method, an acid cleaning method, an electrolytic acid cleaning method or the like before the metal layer is subjected to a chemical conversion treatment. When a degreasing treatment is performed as described above, the chemical conversion treatment of the surface of the metal layer can be further efficiently performed.

### [Bonding Layer 5]

In the packaging material for a cell according to the present invention, the bonding layer 5 is a layer provided between the metal layer 3 and the sealant layer 4 as necessary for strongly bonding these layers.

The bonding layer 5 is formed from an adhesive or resin capable of bonding the metal layer 3 and the sealant layer 4. The adhesive used for forming the bonding layer 5 may be a two-liquid curable adhesive, or may be a one-liquid curable adhesive. Further, the adhesive may be in the form of solvent-soluble type, solvent-dispersion type or solventless type. As the bonding layer 5, a resin composed of an acid-modified polyolefin may be extruded in a molten state to laminate the metal foil 3 and the sealant layer 4 to each other. Further, the adhesion mechanism of the adhesive used for forming the bonding layer 5 is not particularly limited, and may be any one of a chemical reaction type, a solvent volatilization type, a heat melting type, a heat pressing type and so on.

Specific examples of the adhesive component that can be used for forming the bonding layer 5 include polyester-based resins such as polyethylene terephthalate, polybutylene terephthalate, polyethylene naphthalate, polybutylene naphthalate, polyethylene isophthalate, polycarbonate and copolymerized polyester; polyether-based adhesives; polyurethane-based adhesives; epoxy-based resins; phenol resin-based resins; polyamide-based resins such as nylon 6, nylon 66, nylon 12 and copolymerized polyamide; polyolefin-based resins such as polyolefins, carboxylic acid-modified polyolefins and metal-modified polyolefins, polyvinyl acetate-based resins; cellulose-based adhesives; (meth)acryl-based resins; polyimide-based resins; amino resins such as urea resins and melamine resins; rubbers such as chloroprene rubber, nitrile rubber and styrene-butadiene rubber; and silicone-based resins. These adhesive components may be used alone, or may be used in combination of two or more thereof.

The thickness of the bonding layer 5 is, for example, 1 to 40 µm, preferably 2 to 30 µm.

### [Sealant Layer 4]

In the packaging material for a cell according to the present invention, the sealant layer 4 corresponds to an innermost layer, and at the time of assembling a cell, the sealant layer is heat-sealed with itself to hermetically seal the cell element.

While the resin component used for the sealant layer 4 is not particularly limited as long as heat sealing is possible, examples thereof include polyolefins, cyclic polyolefins, carboxylic acid-modified polyolefins and carboxylic acid-modified cyclic polyolefins.

Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferred, and norbornene is further preferred.

The carboxylic acid-modified polyolefin is a polymer obtained by modifying the polyolefin with a carboxylic acid. Examples of the carboxylic acid to be used for modification include maleic acid, acrylic acid, itaconic acid, crotonic acid, maleic anhydride and itaconic anhydride.

The carboxylic acid-modified cyclic polyolefin is a polymer obtained by copolymerizing a monomer that forms a cyclic polyolefin, with the monomer partially replaced by an α,β-unsaturated carboxylic acid or an anhydride thereof, or block-polymerizing or graft-polymerizing an α,β-unsaturated carboxylic acid or an anhydride thereof with a cyclic polyolefin. Cyclic polyolefins that are modified with a carboxylic acid are similar to the cyclic polyolefins described above. Carboxylic acids to be used for modification are similar to those to be used for modification of the acid-modified cycloolefin copolymer.

Among these resin components, crystalline or noncrystalline polyolefins, cyclic polyolefins and blend polymers thereof are preferred; and polyethylene, polypropylene, copolymers of ethylene and norbornene, and blend polymers of two or more thereof are further preferred.

The sealant layer 4 may be formed from one resin component alone, or may be formed from a blend polymer including a combination of two or more resin components. Further, the sealant layer may be formed of only one layer, but may be formed of two or more layers with the same resin component or different resin components.

The thickness of the sealant layer 4 can be appropriately selected, and is, for example, 2 to 2000 µm, preferably 5 to 1000 µm, further preferably 10 to 500 µm.

### 3. Method for Producin Packaging Material for Cell

The method for producing a packaging material for a cell according to the present invention is not particularly limited as long as a laminate body in which layers each having a predetermined composition are laminated is obtained, and the following method is shown as an example.

First, a laminate body with the base material layer 1, the bonding layer 2 and the metal layer 3 laminated in this order (hereinafter, the laminate body may be described as a "laminate body A") is formed. Specifically, the laminate body A can be formed by a dry lamination method in which an adhesive to be used for formation of the bonding layer 2 is applied onto the base material 1 or the metal layer 3, the surface of which is subjected to a chemical conversion treatment as necessary, using a coating method such as an extrusion method, a gravure coating method or a roll coating method, and dried, the metal layer 3 or the base material 1 is then laminated, and the bonding layer 2 is cured.

Then, the sealant layer 4 is laminated on the metal layer 3 of the laminate body A. When the sealant layer 4 is laminated directly on the metal layer 3, a resin component that forms the sealant layer 4 may be applied onto the metal layer 3 of the laminate body A by a method such as a gravure coating method or a roll coating method. When the bonding layer 5 is provided between the metal layer 3 and the sealant layer 4, mention is made of, for example, (1) a method in which the bonding layer 5 and the sealant layer 4 are co-extruded to be laminated on the metal layer 3 of the laminate body A (co-extrusion lamination method); (2) a method in which the bonding layer 5 and the sealant layer 4 are laminated to form a laminate body separately, and the laminate body is laminated on the metal layer 3 of the laminate body A by a thermal lamination method; (3) a method in which an adhesive for formation of the bonding layer 5 is laminated on the metal layer 3 of the laminate body A by an extrusion method or a method in which the adhesive is applied by solution coating, dried at a high temperature and baked, and the sealant layer 4 formed in a sheet shape beforehand is laminated on the bonding layer 5 by a thermal lamination method; and (4) a method in which the melted bonding layer 5 is poured between the metal layer 3 of the laminate body A and the sealant layer 4 formed in a sheet shape beforehand, and simultaneously the laminate body A and the sealant layer 4 are bonded together with the bonding layer 5 interposed therebetween (sandwich lamination).

A laminate body including the base material layer 1, the bonding layer 2, the metal layer 3, the surface of which is subjected to a chemical conversion treatment as necessary, the bonding layer 5 provided as necessary and the sealant layer 4 in this order is formed in the manner described above, and the laminate body may be further subjected to a heating treatment of heat roll contact type, hot air type, near- or far-infrared type or the like for strengthening adhesion of the bonding layer 2 and the bonding layer 5 provided as necessary. For example, this heating treatment is performed under conditions of 150 to 250°C for 1 to 10 hours.

In the packaging material for a cell according to the present invention, the layers that form the laminate body may be subjected to a surface activation treatment such as a corona treatment, a blast treatment, an oxidation treatment or an ozone treatment as necessary for improving or stabilizing the film formability, lamination processing and final product secondary processing (pouching and embossing molding) suitability, and the like.

### 4. Use of Packaging Material for Cell

The packaging material for a cell according to the present invention is used as a packaging material for hermetically sealing and storing cell elements such as a positive electrode, a negative electrode and an electrolyte.

Specifically, a cell element including at least a positive electrode, a negative electrode and an electrolyte is covered with the packaging material for a cell according to the present invention such that a flange portion (region where a sealant layer is in contact with itself) can be formed on the periphery of the cell element while a metal terminal connected to each of the positive electrode and the negative electrode protrudes to outside, and the sealant layer at the flange portion is heat-sealed to itself to hermetically seal the cell element, thereby providing a cell using a packaging material for a cell. When the cell element is stored using the packaging material for a cell according to the present invention, the packaging material for a cell according to the present invention is used such that the sealant portion is on the inner side (surface in contact with the cell element).

The packaging material for a cell according to the present invention may be used for either a primary battery or a secondary battery, but is preferably used for a secondary battery. The type of secondary battery to which the packaging material for a cell according to the present invention is applied is not particularly limited, and examples thereof include lithium ion batteries, lithium ion polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Among these secondary batteries, preferred objects to which the packaging material for a cell according to the present invention is applied include lithium ion batteries and lithium ion polymer batteries.

### EXAMPLES

The present invention will be described in detail below by showing examples and comparative examples. It is to be noted that the present invention is not limited to examples.

### [Examples 1 to 32 and Comparative Examples 1 to 9 and 11 to 32]

A packaging material for a cell including a laminate body having a layer structure of the following composition was produced.

Base material layer 1: biaxially stretched polyamide (nylon 6; thickness: 15 µm).

Bonding layer 2: two-liquid urethane adhesive (thickness: 4 µm) composed of a combination of a polyol compound and an aromatic isocyanate-based compound as shown in Tables 1 and 2.

Metal layer 3: aluminum foil (thickness: 35 µm) with both surfaces subjected to a chemical conversion treatment.

Bonding layer 5: acid-modified polypropylene (thickness: 20 µm).

Sealant layer 4: unstretched polypropylene (thickness: 15 µm).

All the polyol compounds and aromatic isocyanates used in the two-liquid urethane adhesives shown in Tables 1 and 2 are commercially available products. VYLON series (UR 4410 and 800 etc.) manufactured by TOYOBO CO., LTD., TAKELAC series (A1151 etc.) manufactured by Mitsui Chemicals, Inc. and DESMOPHEN (400 etc.) manufactured by Sumika Bayer Urethane Co., Ltd. were used as polyol compounds, and TAKENATE series (A3 etc.) manufactured by Mitsui Chemicals, Inc., CORONATE (L etc.) manufactured by Nippon Polyurethane Industry Co., Ltd. and DESMODULE (44 V20 etc.) manufactured by Sumika Bayer Urethane Co., Ltd. were used as aromatic isocyanates. The polyol compounds shown in Tables 1 and 2 include polyester polyols, polyester polyurethane polyols, polyether polyols and polyether polyurethane polyols.

**[Table 1]**

| NO. | Polyol compound | | | Mixing ratio of polyol compound and aromatic isocyanate-based compound (NCO/OH molar ratio) | Aromatic isocyanate | |
|---|---|---|---|---|---|---|
| | Glass transition temperature (°C) | Weight average molecular weight (×10³) | Hydroxyl equivalent (number/mol) | | Class | Type |
| 1 | -5 to -5 | 10 to 40 | 0.7 to 1.9 | 3 | TDI | TMPADDUCT |
| 2 | 5 to 15 | 10 to 40 | 0.7 to 1.9 | 3 | TDI | TMP ADDUCT |
| 3 | 5 to 15 | 20 to 80 | 0.7 to 1.9 | 15 | MDI | TMPADDUCT |
| 4 | -5 to -5 | 20 to 80 | 0.7 to 1.9 | 15 | MDI | TMPADDUCT |
| 5 | -5 to -5 | 10 to 40 | 0.7 to 1.9 | 3 | TDI | Isocyanurate-modified |
| 6 | 5 to 15 | 10 to 40 | 0.7 to 1.9 | 4 | TDI | Isocyanurate-modified |
| 7 | 5 to 15 | 20 to 80 | 0.7 to 1.9 | 15 | MDI | Polymeric |
| 8 | -5 to -5 | 20 to 80 | 0.7 to 1.9 | 15 | MDI | Polymeric |
| 9 | -5 to -5 | 10 to 40 | 0.7 to 1.9 | 3 | TDI | TMP ADDUCT |
| 10 | 5 to 15 | 10 to 40 | 0.7 to 1.9 | 3 | TDI | TMPADDUCT |
| 11 | 5 to 15 | 20 to 80 | 0.7 to 1.9 | 15 | MDI | TMP ADDUCT |
| 12 | -5 to -5 | 20 to 80 | 0.7 to 1.9 | 15 | MDI | TMPADDUCT |
| 13 | -5 to -5 | 10 to 40 | 0.7 to 1.9 | 3 | TDI | Isocyanurate-modified |
| 14 | 5 to 15 | 10 to 40 | 0.7 to 1.9 | 3 | TDI | Isocyanurate-modified |
| 15 | 5 to 15 | 20 to 80 | 0.7 to 1.9 | 15 | MDI | Polymeric |
| 16 | -5 to 5 | 20 to 80 | 0.7 to 1.9 | 15 | MDI | Polymeric |
| 17 | -15 to -5 | 10 to 40 | 0.7 to 1.9 | 3 | TDI | TMP ADDUCT |
| 18 | -15 to -5 | 20 to 80 | 0.7 to 1.9 | 15 | MDI | TMPADDUCT |
| 19 | -15 to -5 | 20 to 80 | 0.7 to 1.9 | 22 | MDI | Polymeric |
| 20 | -15 to -5 | 10 to 40 | 0.7 to 1.9 | 30 | TDI | Isocyanurate-modified |
| 21 | 15 to 25 | 10 to 40 | 0.7 to 1.9 | 3 | TDI | TMPADDUCT |
| 22 | 15 to 25 | 20 to 80 | 0.7 to 1.9 | 22 | MDI | TMPADDUCT |
| 23 | 15 to 25 | 20 to 80 | 0.7 to 1.9 | 15 | MDI | Polymeric |
| 24 | 15 to 25 | 10 to 40 | 0.7 to 1.9 | 3 | TDI | Isocyanurate-modified |
| 25 | -5 to -5 | 1 to 10 | 0.7 to 1.9 | 3 | TDI | TMPADDUCT |
| 26 | -5 to -5 | 1 to 10 | 0.7 to 1.9 | 3 | MDI | TMPADDUCT |
| 27 | 5 to 15 | 1 to 40 | 0.7 to 1.9 | 3 | MDI | TMP ADDUCT |
| 28 | 5 to 15 | 1 to 10 | 0.7 to 1.9 | 3 | TDI | TMPADDUCT |
| 29 | -5 to -5 | 20 to 80 | 0.7 to 1.9 | 15 | MDI | TMPADDUCT |
| 30 | -5 to -5 | 20 to 80 | 0.7 to 1.9 | 30 | MDI | Polymeric |
| 31 | 5 to 15 | 20 to 80 | 0.7 to 1.9 | 22 | MDI | Polymeric |
| 32 | 5 to 15 | 20 to 80 | 0.7 to 1.9 | 15 | MDI | TMPADDUCT |

In the table, TMP is trimethylolpropane.

**[Table 2]**

| NO. | Polyol compound | | | Mixing ratio of polyol compound and aromatic isocyanate-based compound (NCO/OH molar ratio) | Aromatic isocyanate-based compound | |
|---|---|---|---|---|---|---|
| | Glass transition temperature (°C) | Weight average molecular weight (×10³) | Hydroxyl equivalent (number/mol) | | Class | Type |
| 33 | -15 to -5 | 1 to 10 | 0.7 to 1.9 | 3 | TDI | TMPADDUCT |
| 34 | -15 to -5 | 20 to 80 | 0.7 to 1.9 | 15 | MDI | TMPADDUCT |
| 35 | 15 to 25 | 1 to 10 | 0.7 to 1.9 | 3 | TDI | TMPADDUCT |
| 36 | 15 to 25 | 20 to 80 | 0.7 to 1.9 | 15 | MDI | TMPADDUCT |
| 37 | -15 to -5 | 1 to 10 | 0.7 to 1.9 | 3 | TDI | Isocyanurate-modified |
| 38 | -15 to -5 | 20 to 80 | 0.7 to 1.9 | 15 | MDI | Polymeric |
| 39 | 15 to 25 | 1 to 10 | 0.7 to 1.9 | 3 | TDI | Isocyanurate-modified |
| 40 | 15 to 25 | 20 to 80 | 0.7 to 1.9 | 15 | MDI | Polymeric |
| 41 | -5 to -5 | 1 to 10 | 0.7 to 1.9 | 3 | TDI | TMPADDUCT |
| | | | | | | |
| 43 | -5 to -5 | 20 to 80 | 0.7 to 1.9 | 15 | MDI | TMPADDUCT |
| 44 | -5 to -5 | 20 to 80 | 0.7 to 1.9 | 15 | MDI | Polymeric |
| 45 | 5 to 15 | 1 to 10 | 0.7 to 1.9 | 3 | TDI | TMPADDUCT |
| 46 | 5 to 15 | 1 to 10 | 0.7 to 1.9 | 3 | TDI | Isocyanurate-modified |
| 47 | 5 to 15 | 20 to 80 | 0.7 to 1.9 | 15 | MDI | TMPADDUCT |
| 48 | 5 to 15 | 20 to 80 | 0.7 to 1.9 | 15 | MDI | Polymeric |
| 49 | -15 to -5 | 10 to 40 | 0.7 to 1.9 | 3 | TDI | TMPADDUCT |
| 50 | -15 to -5 | 10 to 40 | 0.7 to 1.9 | 3 | TDI | Isocyanurate-modified |
| 51 | 15 to 25 | 10 to 40 | 0.7 to 1.9 | 3 | TDI | Adduct |
| 52 | 15 to 25 | 10 to 40 | 0.7 to 1.9 | 3 | TDI | Isocyanurate-modified |
| 53 | -15 to -5 | 20 to 80 | 0.7 to 1.9 | 15 | MDI | TMPADDUCT |
| 54 | -15 to -5 | 20 to 80 | 0.7 to 1.9 | 15 | MDI | Polymeric |
| 55 | 15 to 25 | 20 to 80 | 0.7 to 1.9 | 15 | MDI | TMPADDUCT |
| 56 | 15 to 25 | 20 to 80 | 0.7 to 1.9 | 15 | MDI | Polymeric |
| 57 | -15 to -5 | 1 to 10 | 0.7 to 1.9 | 3 | TDI | TMPADDUCT |
| 58 | -15 to -5 | 1 to 10 | 0.7 to 1.9 | 3 | TDI | Isocyanurate-modified |
| 59 | -15 to -5 | 20 to 80 | 0.7 to 1.9 | 15 | MDI | TMPADDUCT |
| 60 | -15 to -5 | 20 to 80 | 0.7 to 1.9 | 15 | MDI | Polymeric |
| 61 | 15 to 25 | 1 to 10 | 0.7 to 1.9 | 3 | TDI | TMPADDUCT |
| 62 | 15 to 25 | 1 to 10 | 0.7 to 1.9 | 3 | TDI | Isocyanurate-modified |
| 63 | 15 to 25 | 20 to 80 | 0.7 to 1.9 | 15 | MDI | TMPADDUCT |
| 64 | 15 to 25 | 20 to 80 | 0.7 to 1.9 | 30 | MDI | Polymeric |

In the table, TMP is trimethylolpropane.

The chemical conversion treatment of the aluminum foil used as the metal layer 3 was performed by applying to both the surfaces of the aluminum foil a treatment liquid including a phenol resin, a chromium fluoride compound and phosphoric acid using a roll coating method, and performing baking for 20 seconds under such conditions that the film temperature was 180°C or higher.

The bonding layer 2 and the metal layer 3 were laminated on the base material layer 1 by the dry lamination method, and the sealant layer 5 was then laminated on the metal layer 3 by the dry lamination method. Specifically, the bonding layer 2 was applied onto the base material layer 1, and bonded to the metal layer 3 under pressure and heating, and an aging treatment was performed at 60°C for 24 hours to prepare a laminate body of base material layer 1/bonding layer 2/metal layer 3. Acid-modified polypropylene for forming the bonding layer 5 and polypropylene for forming the sealant layer 4 were then co-extruded in a molten state on the laminate body on the metal layer 3 side to obtain a packaging material for a cell including a laminate body with the base material layer 1, the bonding layer 2, the metal layer 3, the bonding layer 5 and the sealant layer 4 laminated in this order.

### [Evaluation of Properties]

### (1) Hardness in Nano-indentation Method

Using a nano-indenter (TriboIndenter TI950 manufactured by Hysitron, Inc.), an indenter having a tip shape of a regular triangular pyramid (Berkovich-type) composed of a diamond tip (TI-0037 Cube Corner 90° Total included angle; model: AA11041012 manufactured by Hysitron, Inc.) was pressed to an indentation depth of 5 µm into the bonding layer 2 of each of the packaging material for a cell, which were obtained as described above, a hardness at which the indenter was pressed into the bonding layer was measured.

### (2) Peak Temperature for Loss Modulus in Measurement of Dynamic Viscoelasticity

A laminate body of base material layer 1/bonding layer 2 was prepared using the base material layer 1 and the bonding layer 2 employed in each of the examples and comparative examples. Specifically, the bonding layer 2 was applied onto the base material layer 1 identical to that in each of the examples and comparative examples, and an aging treatment was performed at 60°C for 24 hours to prepare a laminate body of base material layer 1/bonding layer 2. The obtained laminate body has the same structure as that in each of the examples and comparative examples except that the metal layer 3, the bonding layer 4 and the sealant layer 5 are not laminated.

The obtained laminate body was cut to 10 mm × 5 mm to provide a sample, and a peak temperature for the loss modulus (E") was determined with the sample heated from -50°C to 200°C at a temperature elevation rate of 1°C/minute at a frequency of 1 Hz using a dynamic viscoelasticity measurement device (Rheometric System Analyzer Model RSAIII manufactured by TA Instruments Japan Inc.).

### (3) Ratio of Peak of Hydrogen Bonds to Methylene in Infrared Absorption Spectrum Method

A laminate body of base material layer 1/bonding layer 2 was prepared using the base material layer 1 and the bonding layer 2 employed in each of the examples and comparative examples. Specifically, the bonding layer 2 was applied onto the base material layer 1 identical to that in each of the examples and comparative examples, and an aging treatment was performed at 60°C for 24 hours to prepare a laminate body of base material layer 1/bonding layer 2. The obtained laminate body has the same structure as that in each of the examples and comparative examples except that the metal layer 3, the bonding layer 4 and the sealant layer 5 are not laminated.

The obtained laminate body was provided as a sample, an integral value of peak areas existing in 2800 to 3000 cm⁻¹ and an integral value of peak areas existing in 3100 to 3500 cm⁻¹ were determined as I_{M} and I_{H}, respectively, by measuring an infrared absorption spectrum of the bonding layer 2 using an infrared absorption spectrum measurement device (NICOLET 380 manufactured by Thermo Scientific K.K.), and a ratio (I_{H}/I_{M}) was calculated.

### [Evaluation of Moldability]

Each of the obtained packaging materials for a cell was cut to prepare a strip of 120 × 80 mm, and the strip was used as a test sample. A straight mold including a rectangular male mold of 30 × 50 mm and a female mold having a clearance of 0.5 mm with the male mold was provided, the test sample was placed on the female mold such that the heat-bonding resin layer side was situated on the male mold side, and cold molding (draw-in single stage molding) was performed with the test sample pressed under a pressing force (contact pressure) of 0.1 MPa so as to have a molding depth of 6.5 mm. Whether or not pinholes and cracks were generated in the metal layer in each of the molded test samples was checked, and an incidence (%) of pinholes and cracks was calculated. A packaging material found to have one or more pinholes or cracks after performing the molding was judged to be a defective molding, and the incidence of pinholes and cracks was determined as a ratio of defective moldings occurring when 100 test samples were molded under the above-mentioned conditions.

### [Results of Evaluation of Properties and Moldability]

The obtained results are shown in Tables 3 and 4. From the results, it has become evident that when (i) the hardness in the nano-indentation method satisfies 20 to 115 MPa, and the peak temperature for the loss modulus satisfies 10 to 60°C, (ii) the hardness in the nano-indentation method satisfies 20 to 115 MPa, and the ratio (I_{H}/I_{M}) satisfies 0.15 to 1.5, and (iii) the peak temperature for the loss modulus satisfies 10 to 60°C, and the ratio (I_{H}/I_{M}) satisfies 0.15 to 1.5, the occurrence of tearing during molding can be considerably suppressed, so that an excellent moldability can be secured (see Examples 1 to 32). Particularly when all of the hardness of 20 to 115 MPa in the nano-indentation method, the peak temperature of 10 to 60°C for the loss modulus and the ratio (I_{H}/I_{M}) of 0.15 to 1.5 were satisfied, the moldability was remarkably improved (see Examples 1 to 8).

On the other hand, when only one or none of the hardness of 20 to 115 MPa in the nano-indentation method, the peak temperature of 10 to 60°C for the loss modulus and the ratio (I_{H}/I_{M}) of 0.15 to 1.5 was satisfied, the incidence rate of tearing at 6.5 mm increased (see Comparative Examples 1 to 9 and 11 to 32).

Although not wishing limited interpretation, the following matters are conceivable from the above test results. That is, it is considered that in the packaging material for a cell according to the present invention, multiple contribution of the properties 1 to 3 in the bonding layer 2 causes the bonding layer (urea, urethane or the like) to form a hard segment having a cohesive force between molecules and in the molecule moderately, so that a high modulus is achieved at room temperature, and a moderate distance can be kept between crosslinking points to form a flexible layer, leading to improvement of the moldability. Therefore, it is considered that the properties 1 to 3 provide alternative property values serving as indexes for superiority or inferiority in moldability, and the moldability is improved as these properties are satisfied.

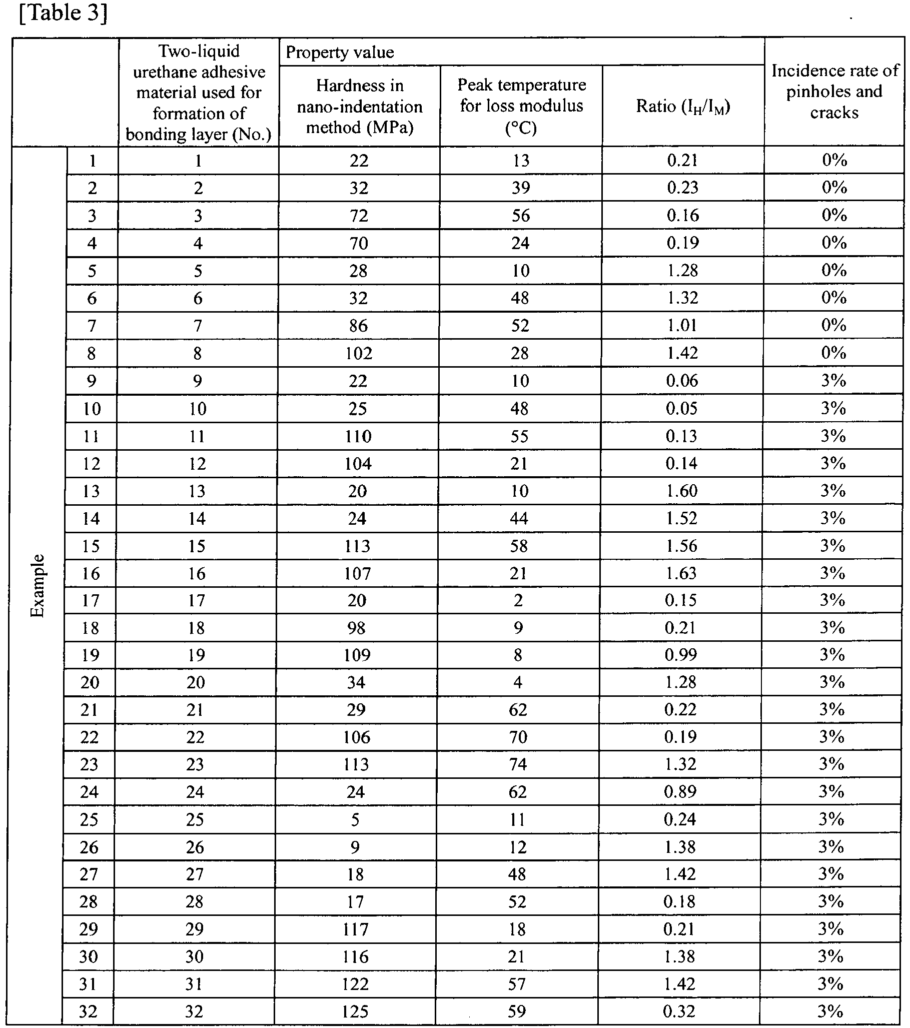

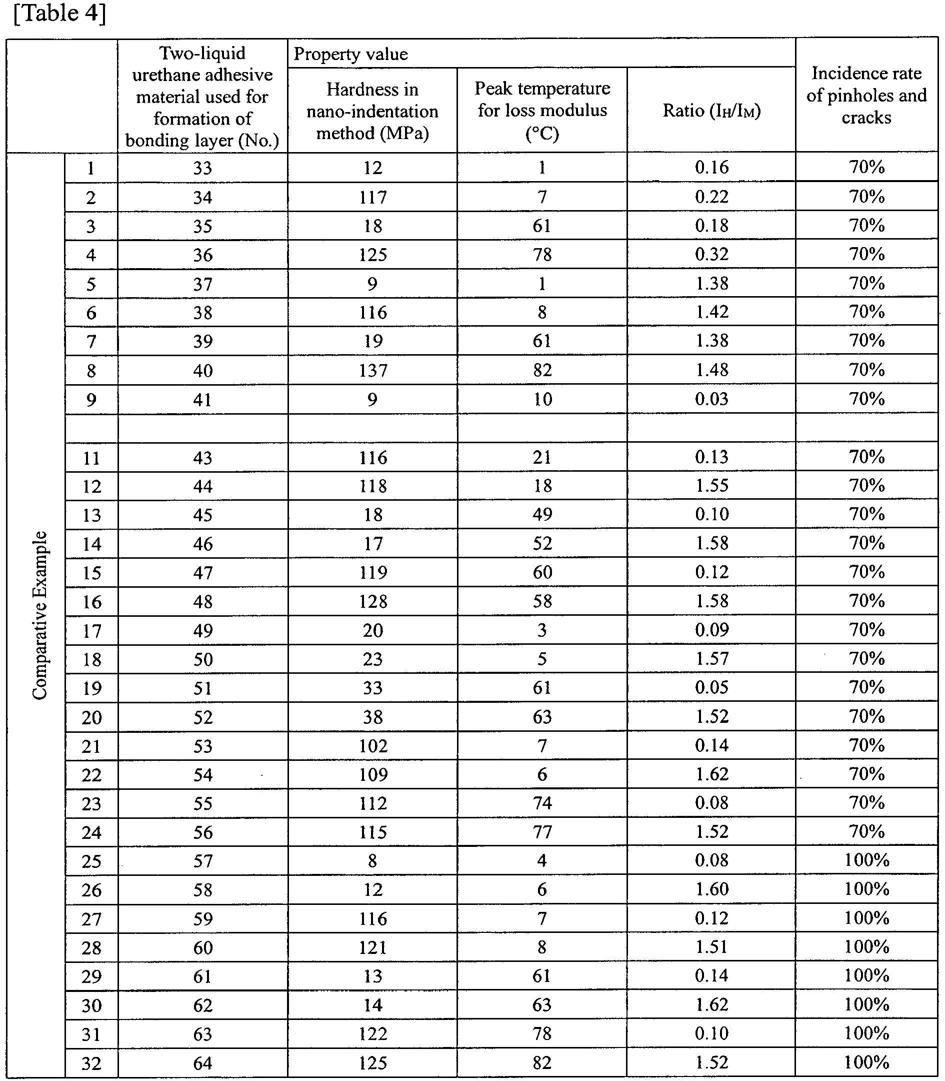

### DESCRIPTION OF REFERENCE SIGNS

1: Base material layer
1a: Base material layer
1b: Base material layer
2: Bonding layer
3: Metal layer
4: Sealant layer

## Claims

1. A packaging material for a cell which comprises a laminate body including at least a base material layer (1), a bonding layer (2), a metal layer (3) and a sealant layer (4) in this order, **characterised in that** the bonding layer (2) satisfies at least two of the following properties (1) to (3):
(1) The hardness is 20 to 115 MPa when an indenter is pressed into the bonding layer (2) by 5 µm from the cross-section of the laminate body using a nano-indenter.
(2) The peak temperature is 10 to 60°C for the loss modulus peak that is acquired when a dynamic viscoelasticity is measured at a frequency of 1 Hz for the bonding layer (2).
(3) I_{H}/I_{M} is 0.15 to 1.5, where an integral value of peak areas existing in 2800 to 3000 cm⁻¹ is defined as I_{M}, and an integral value of peak areas existing in 3100 to 3500 cm⁻¹ is defined as I_{H}, which are measured using an infrared absorption spectrum.

2. The packaging material for a cell according to claim 1, wherein the bonding layer (2) satisfies all of the properties (1) to (3).

3. The packaging material for a cell according to claim 1 or 2, wherein the bonding layer (2) satisfies the hardness of 22 to 102 MPa, the peak temperature of 13 to 56°C for the loss modulus and the ratio I_{H}/I_{M} of 0.16 to 1.42.

4. The packaging material for a cell according to any one of claims 1 to 3, wherein the bonding layer (2) is formed from an urethane-based adhesive containing a polyol compound and an isocyanate-based compound.

5. The packaging material for a cell according to any one of claims 1 to 4, wherein the metal layer (3) is formed of an aluminum foil.

6. The packaging material for a cell according to any one of claims 1 to 5, wherein the sealant layer (4) is formed of at least one selected from the group consisting of a polyolefin, a cyclic polyolefin, a carboxylic acid-modified polyolefin and a carboxylic acid-modified cyclic polyolefin.

7. A cell, wherein a cell element comprising at least a positive electrode, a negative electrode and an electrolyte is stored in the packaging material for a cell according to any one of claims 1 to 6.

8. A method for producing a cell, the method including:
a step of storing a cell element including at least a positive electrode, a negative electrode and an electrolyte in the packaging material for a cell, wherein
the packaging material for a cell includes a laminate body including at least a base material layer (1), a bonding layer (2), a metal layer (3) and a sealant layer (4) laminated in this order, **characterised in that** the bonding layer (2) satisfies at least two of the following properties (1) to (3):
(1) The hardness is 20 to 115 MPa when an indenter is pressed into the bonding layer (2) by 5 µm from the cross-section of the laminate body using a nano-indenter.
(2) The peak temperature is 10 to 60°C for the loss modulus peak that is acquired when a dynamic viscoelasticity is measured at a frequency of 1 Hz for the bonding layer (2).
(3) I_{H}/I_{M} is 0.15 to 1.5, where an integral value of peak areas existing in 2800 to 3000 cm⁻¹ is defined as I_{M}, and an integral value of peak areas existing in 3100 to 3500 cm⁻¹ is defined as I_{H}, which are measured using an infrared absorption spectrum.

9. Use of a laminate body as a packaging material for a cell, the laminate body including at least a base material layer (1), a bonding layer (2), a metal layer (3) and a sealant layer (4) in this order, **characterised in that** the bonding layer (2) satisfies at least two of the following properties (1) to (3):
(1) The hardness is 20 to 115 MPa when an indenter is pressed into the bonding layer (2) by 5 µm from the cross-section of the laminate body using a nano-indenter.
(2) The peak temperature is 10 to 60°C for the loss modulus peak that is acquired when a dynamic viscoelasticity is measured at a frequency of 1 Hz for the bonding layer (2).
(3) I_{H}/I_{M} is 0.15 to 1.5, where an integral value of peak areas existing in 2800 to 3000 cm⁻¹ is defined as I_{M}, and an integral value of peak areas existing in 3100 to 3500 cm⁻¹ is defined as I_{H}, which are measured using an infrared absorption spectrum.

## Patentansprüche

1. Verpackungsmaterial für eine Zelle, welche einen Laminatkörper umfaßt, welcher mindestens eine Basismaterialschicht (1), eine Verbindungsschicht (2), eine Metallschicht (3) und eine Versiegelungsschicht (4) in dieser Reihenfolge einschließt, wobei die Verbindungsschicht (2) mindestens zwei der folgenden Eigenschaften (1) bis (3) erfüllt:
(1) die Härte beträgt 20 bis 115 MPa, wenn ein Eindringkörper in die Verbindungsschicht (2) bis 5 µm von dem Querschnitt des Laminatkörpers unter Verwendung eines Nano-Eindringkörpers gepreßt wird.
(2) die Peak-Temperatur beträgt 10 bis 60°C für den Verlustmodulpeak, welcher erlangt wird, wenn eine dynamische Viskoelastizität bei einer Frequenz von 1 Hz für die Verbindungsschicht (2) gemessen wird.
(3) I_{H}/I_{M} beträgt 0,5 bis 1,5, wenn ein Integralwert der Peak-Bereiche, vorliegend bei 2800 bis 3000 cm⁻¹, als I_{M} definiert wird, und ein Integralwert der Peak-Bereiche, vorliegend bei 3100 bis 3500 cm⁻¹, als I_{H} definiert wird, welche unter Verwendung eines Infrarotabsorptionsspektrums gemessen werden.

2. Verpackungsmaterial für eine Zelle gemäß Anspruch 1, wobei die Verbindungsschicht (2) sämtliche der Eigenschaften (1) bis (3) erfüllt.

3. Verpackungsmaterial für eine Zelle gemäß Anspruch 1 oder 2, wobei die Verbindungsschicht (2) die Härte von 22 bis 102 MPa, die Peak-Temperatur von 13 bis 56°C für den Verlustmodul und das Verhältnis I_{H}/I_{M} von 0,16 bis 1,42 erfüllt.

4. Verpackungsmaterial für eine Zelle gemäß einem der Ansprüche 1 bis 3, wobei die Verbindungsschicht (2) aus einem Haftmittel auf Urethan-Basis, enthaltend eine Polyolverbindung und eine Verbindung auf Isocyanat-Basis, gebildet wird.

5. Verpackungsmaterial für eine Zelle gemäß einem der Ansprüche 1 bis 4, wobei die Metallschicht (3) aus einer Aluminiumfolie gebildet wird.

6. Verpackungsmaterial für eine Zelle gemäß einem der Ansprüche 1 bis 5, wobei die Versiegelungsschicht (4) aus mindestens einem, ausgewählt aus der Gruppe, bestehend aus einem Polyolefin, einem cyclischen Polyolefin, einem Carbonsäure-modifizierten Polyolefin und einem Carbonsäure-modifizierten cyclischen Polyolefin, gebildet wird.

7. Zelle, wobei ein Zellelement, umfassend mindestens eine positive Elektrode, eine negative Elektrode und einen Elektrolyten, in dem Verpackungsmaterial für ein Zelle gemäß einem der Ansprüche 1 bis 6 gelagert wird.

8. Verfahren zur Herstellung einer Zelle, wobei das Verfahren einschließt:
einen Schritt des Lagerns eines Zellelements, welches mindestens eine positive Elektrode, eine negative Elektrode und einen Elektrolyten einschließt, in dem Verpackungsmaterial für eine Zelle, wobei das Verpackungsmaterial für eine Zelle einen Laminatkörper, welcher mindestens eine Basismaterialschicht (1), eine Verbindungsschicht (2), eine Metallschicht (3) und eine Versiegelungsschicht (4), laminiert in dieser Reihenfolge, einschließt, und die Verbindungsschicht (2) mindestens zwei der folgenden Eigenschaften (1) bis (3) erfüllt:
(1) die Härte beträgt 20 bis 115 MPa, wenn ein Eindringkörper in die Verbindungsschicht (2) bis 5 µm von dem Querschnitt des Laminatkörpers unter Verwendung eines Nano-Eindringkörpers gepreßt wird.
(2) die Peak-Temperatur beträgt 10 bis 60°C für den Verlustmodulpeak, welcher erlangt wird, wenn eine dynamische Viskoelastizität bei einer Frequenz von 1 Hz für die Verbindungsschicht (2) gemessen wird.
(3) Iₕ/I_{M} beträgt 0,5 bis 1,5, wenn ein Integralwert der Peak-Bereiche, vorliegend bei 2800 bis 3000 cm⁻¹, als I_{M} definiert wird, und ein Integralwert der Peak-Bereiche, vorliegend bei 3100 bis 3500 cm⁻¹, als I_{H} definiert wird, welche unter Verwendung eines Infrarotabsorptionsspektrums gemessen werden.

9. Verwendung eines Laminatkörpers als ein Verpackungsmaterial für eine Zelle, wobei der Laminatkörper mindestens eine Basismaterialschicht (1), eine Verbindungsschicht (2), eine Metallschicht (3) und eine Versiegelungsschicht (4) in dieser Reihenfolge einschließt, wobei die Verbindungsschicht (2) mindestens zwei der folgenden Eigenschaften (1) bis (3) erfüllt:
(1) die Härte beträgt 20 bis 115 MPa, wenn ein Eindringkörper in die Verbindungsschicht (2) bis 5 µm von dem Querschnitt des Laminatkörpers unter Verwendung eines Nano-Eindringkörpers gepreßt wird.
(2) die Peak-Temperatur beträgt 10 bis 60°C für den Verlustmodulpeak, welcher erlangt wird, wenn eine dynamische Viskoelastizität bei einer Frequenz von 1 Hz für die Verbindungsschicht (2) gemessen wird.
(3) Iₕ/I_{M} beträgt 0,5 bis 1,5, wenn ein Integralwert der Peak-Bereiche, vorliegend bei 2800 bis 3000 cm⁻¹, als I_{M} definiert wird, und ein Integralwert der Peak-Bereiche, vorliegend bei 3100 bis 3500 cm⁻¹, als I_{H} definiert wird, welche unter Verwendung eines Infrarotabsorptionsspektrums gemessen werden.

## Revendications

1. Matière d'emballage pour une pile qui comprend un corps stratifié comprenant au moins une couche de matière de base (1), une couche de liaison (2), une couche de métal (3) et une couche de scellement (4) dans cet ordre, **caractérisée en ce que** la couche de liaison (2) satisfait à au moins deux des propriétés suivantes (1) à (3):
(1) la dureté va de 20 à 115 MPa quand on enfonce de 5µm un pénétrateur dans la couche de liaison (2) à partir de la section transversale du corps stratifié en utilisant un nano-pénétrateur;
(2) la température maximale va de 10 à 60°C pour le pic de module de pertes acquis quand on mesure une viscoélasticité dynamique à une fréquence de 1 Hz pour la couche de liaison (2);
(3) I_{H}/I_{M} va de 0.15 à 1.5 quand une valeur intégrale des zones de pic existant dans la gamme 2800 à 3000 cm⁻¹ est définie comme I_{M}, et une valeur intégrale de zones de pic existant dans la gamme 3100 à 3500 cm⁻¹ est définie comme I_{H}, qui sont mesurées en utilisant un spectre d'absorption infrarouge.

2. Matière d'emballage pour une pile selon la revendication 1, dans laquelle la couche de liaison (2) satisfait à toutes les propriétés (1) à (3).

3. Matière d'emballage pour une pile selon la revendication 1 ou 2, dans laquelle la couche de liaison (2) satisfait à la dureté de 22 à 102 MPa, à la température maximale de 13 à 56°C pour le module de pertes et au rapport I_{H}/I_{M} de 0.16 à 1.42.

4. Matière d'emballage pour une pile selon l'une quelconque des revendications 1 à 3, dans laquelle la couche de liaison (2) est formée à partir d'un adhésif à base d'uréthane contenant un composé polyol et un composé à base d'isocyanate.

5. Matière d'emballage pour une pile selon l'une quelconque des revendications 1 à 4, dans laquelle la couche de métal (3) est formée d'une feuille d'aluminium.

6. Matière d'emballage pour une pile selon l'une quelconque des revendications 1 à 5, dans laquelle la couche de scellement (4) est formée d'au moins l'un sélectionné parmi le groupe consistant en une polyoléfine, une polyoléfine cyclique, une polyoléfine modifiée par un acide carboxylique et une polyoléfine cyclique modifiée par un acide carboxylique.

7. Pile dans laquelle un élément de pile comprenant au moins une électrode positive, une électrode négative et un électrolyte est stocké dans la matière d'emballage pour une pile selon l'une quelconque des revendications 1 à 6.

8. Procédé de production d'une pile, le procédé comprenant les suivants:
une étape de stockage d'un élément de pile comprenant au moins une électrode positive, une électrode négative et un électrolyte dans la matière d'emballage pour une pile, dans lequel la matière d'emballage pour une pile comprend un corps stratifié comprenant au moins une couche de matière de base (1), une couche de liaison (2), une couche de métal (3) et une couche de scellement stratifiées dans cet ordre, **caractérisé en ce que** la couche de liaison (2) satisfait à au moins deux des propriétés suivantes (1) à (3):
(1) la dureté va de 20 à 115 MPa quand on enfonce de 5µm un pénétrateur dans la couche de liaison (2) à partir de la section transversale du corps stratifié en utilisant un nano-pénétrateur;
(2) la température maximale va de 10 à 60°C pour le pic de module de pertes acquis quand on mesure une viscoélasticité dynamique à une fréquence de 1 Hz pour la couche de liaison (2);
(3) I_{H}/I_{M} va de 0.15 à 1.5 quand une valeur intégrale des zones de pic existant dans la gamme 2800 à 3000 cm⁻¹ est définie comme I_{M}, et une valeur intégrale de zones de pic existant dans la gamme 3100 à 3500 cm⁻¹ est définie comme I_{H}, qui sont mesurées en utilisant un spectre d'absorption infrarouge.

9. Utilisation d'un corps stratifié comme matière d'emballage pour une pile, le corps stratifié comprenant au moins une couche de matière de base (1), une couche de liaison (2), une couche de métal (3) et une couche de scellement (4) dans cet ordre, **caractérisée en ce que**
la couche de liaison (2) satisfait à au moins deux des propriétés suivantes (1) à (3):
(1) la dureté va de 20 à 115 MPa quand on enfonce de 5µm un pénétrateur dans la couche de liaison (2) à partir de la section transversale du corps stratifié en utilisant un nano-pénétrateur;
(2) la température maximale va de 10 à 60°C pour le pic de module de pertes acquis quand on mesure une viscoélasticité dynamique à une fréquence de 1 Hz pour la couche de liaison (2);
(3) I_{H}/I_{M} va de 0.15 à 1.5 quand une valeur intégrale des zones de pic existant dans la gamme 2800 à 3000 cm⁻¹ est définie comme I_{M}, et une valeur intégrale de zones de pic existant dans la gamme 3100 à 3500 cm⁻¹ est définie comme I_{H}, qui sont mesurées en utilisant un spectre d'absorption infrarouge.
